# EUROPEAN PATENT APPLICATION

(11) **EP 2 006 611 A2**
(43) Date of publication of application: **24.12.2008**
(21) Application number: 08475009.0
(22) Date of filing: 09.06.2008
(51) Int. Cl.: F24J 2/05

(54) **Absorber of solar vacuum tube**

(30) Priority: 19.06.2007 SK 842007
(71) Applicant: Schener, s.r.o., 911 05 Trencin (SK)
(72) Inventor: Skalík, Richard, 911 05, Trencín (SK)
(74) Representative: Bacik, Kvetoslav

(57) **Abstract**

Absorber (2) of solar vacuum tube, inserted into a glass tube (1) all along its length together with not less than one header (3), led through a sealed end of the tube is accomplished as a one-part or multiple element of material with good thermal diffusivity, preferentially of a plate, with a coat of absorptive layer on the surface and it is square or wavy along the length. In the cross section, its each part has a shape of an opened or closed pattern, by which the circuit of cross section of the solar vacuum tube (1), limited by its inner diameter is individually or in connection with another part mostly or entirely filled up. Each part of the absorber (2) is connected by means of one header (3) at least.

## Description

### Scope

Technical solution concerns the absorber of solar vacuum tube. It appertains to the scope of machinery. It is the matter of a device for solar radiation collecting and its ensuing transformation into the thermal energy. Absorber is a part of glass solar vacuum tube that, in turn, is an element of solar collector. Solar collector is a part of solar system, designed for heat production.

### State-of-the-art

One of the types of solar radiation -to- heat converters is glass tubes, usually with circular section and a heat collector inside. Arrangement of two glass tubes, sealed at the ends is well-known. In the space between the tubes, vacuum is formed. Absorber is the inner tube that has an absorbing coat, applied on the outer side, customarily in multiple layers. Heat is detracted through straight contact of heat-carrying liquid, such as water, with the inner glass tube. Disadvantage of such a solution is cracking particularly of the inner tube as a result of thermal shocks or frost. Another form of heat take - off is construction in the form of single or multiple tubes of material with good thermal diffusivity, such as copper or aluminum, which are inserted into the glass tube along with shaped lamellas, mostly of copper or aluminum as well. The lamellas are used for heat transmission from the inner glass tube to the tubes. The tubes can be designed as through-flow ones if they are led through the end plugs into the tube and then out of it and the medium passes through them or as thermal (closed) ones, working on the basis of liquid evaporation and circulation inside the tubes as a result of warming-up from the absorber and ensuing heat transmission on the cooler side. Thermal header is led through the plug out of the end of the tube. Disadvantage of this solution is that vacuum, used as isolation, is only between two glass tubes. In the space from which the heat is detracted, there is no vacuum as isolation. In consequence, there are heat leaks, vapor condensation inside the tube with resulting deterioration of the whole glass tube. Further disadvantage is an incomplete contact of the thermal tubes inside the tube with the absorber by means of the shaped lamellas.
Yet another type of solar tube consists of one glass tube the ends of which are melt-up and both the absorber and thermal collecting tube (tubes) is placed inside of it, where vacuum is formed as isolation. The header is pressed into the absorber. Absorber has a flat, moderately curved shape that is wavy along the tube. The absorber is made of copper- or aluminum-base alloy or alloy based of any other material with good thermal diffusivity. This kind of the solar glass tube has disadvantage that the manufactured shapes of absorber are inapt to gather effectively the solar radiation all over the day and over whole period of year.

### Subject matter of the invention

The mentioned deficiencies are corrected by the submitted solution the matter of which is that the absorber is built up out of the material with good thermal diffusivity, such as a plate with an absorptive coat on the surface. The absorber is its length along flat or wavy. Its cross section has the shape of an open or closed pattern and/or multiple patterns which individually or all together fill up mostly or entirely the circular cross section limited by the glass tube wall. Each part of the absorber is connected with not less than one header. The absorber and the header (headers) are located inside of the glass solar tube in which vacuum is formed. The advantage of this absorber is its efficiency to collect the solar radiation during a day of each season of the year.

### Review of the figures in the drawings

Solution is specified by means of figures, whereby the Fig. 1 represents the cross section of solar vacuum tube with the absorber in the form of two closed semi-circles and with one header; Fig. 2 represents the cross section of solar vacuum tube in the form of open semi-circles connected together with clamps and with one header; Fig. 3 represents the cross section of solar vacuum tube with the circular absorber and with two headers.

### Examples of accomplished invention

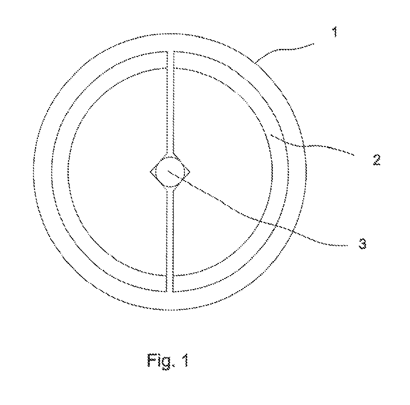

In the example of accomplishment according to the Fig. 1, the solar vacuum tube is made up of one glass tube 1, sealed at the ends by means of plugs (not shown). Into the tube 1, the metallic absorber 2 is inserted the surface of which is coated along the whole length with absorptive layer and wavy. The absorber 2 has the cross section in the shape of two semi-circles with radius close to the inner radius of the tube 1, applied to each other by flat sections and connected together in them. In the middle of the flat sections, the metallic header 3 is pressed up into the absorber 2. This solution is the same regardless the construction of the header 3. This header can be closed and led through one end of the tube 1 out, or a through-flow one and passing through the plugs at both ends of the tube 1, eventually, a through-flow one and led both in and out through the same end of the tube 1.

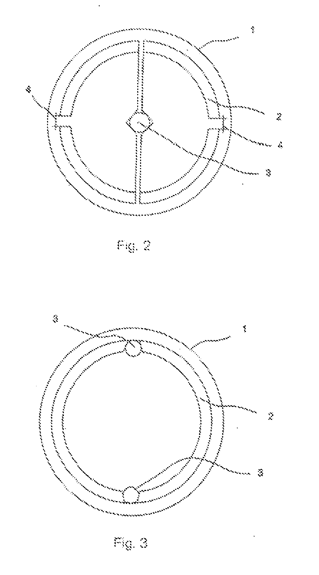

In the example of accomplishment according to the Fig. 2, the lay-out of the elements is the same as in the example above. In cross section, the absorber 2 has the shape of two opened semi-circles the opened ends of which are connected to each other by means of the clamps 4.

In the example of implementation according to Fig. 3, the absorber 2 has a circular cross section. Its surface is wavy. The absorber 2 is inserted into the glass solar tube 1 and it has diameter close to the inner diameter of the tube 1. Two headers 3 are pressed into the absorber 2 opposite each other in the distance of its diameter. The headers are flow-through ones through both ends of the solar tube 1. They can also be flow - through ones, led both in and out through one end of the solar tube 1. After assemblage of the device, vacuum is created in the tube 1.

Solar radiation strikes through the glass of the tube 1 upon circumferential surface of the absorber 2 and is transformed into heat. It dissipates within the metal of which the absorber 2 is made and warms up the heat - carrying medium in the flow - through header 3. In the warmed up closed header 3, evaporation of the closed liquid and circulation of its vapors within this header 3 occurs that transmits the heat in the condenser (not shown), located on the outer side of the tube 1.

## Claims

1. The absorber of solar vacuum tube, inserted into the glass tube all along its length together with not less than one header, led through a sealed end of the tube, marked by the fact that it is accomplished as a one-part or multiple element of material with good thermal diffusivity, preferentially of a plate, with a coat of absorptive layer on the surface and it is square or wavy along the length, whereby in the cross section, its each part has a shape of opened or closed pattern, whereby the circuit of cross section of the tube (1), limited by its inner diameter, individually or in connection with another part, is mostly or entirely filled up by this pattern or patterns and each part of the absorber (2) is connected at least once with not less than one header (3).
